Europäisches Patentamt

European Patent Office

Office européen des brevets

(11) Publication number: 0 482 531 A1

# EUROPEAN PATENT APPLICATION

(21) Application number: 91117850.7

(22) Date of filing: 18.10.91

(51) Int. Cl.5: B65G 17/08

(30) Priority: 26.10.90 US 603512

(43) Date of publication of application:
29.04.92 Bulletin 92/18

(84) Designated Contracting States:
AT BE CH DE DK ES FR GB GR IT LI LU NL SE

(71) Applicant: REXNORD CORPORATION
4701 West Greenfield Avenue
Milwaukee, WI 53214(US)

(72) Inventor: Counter, Louis F.
8421 Midland Drive
Greendale WI 53129(US)
Inventor: Ensch, Peter J.
3456 N. Oakland Avenue
Milwaukee, WI 53211(US)

(74) Representative: Patentanwälte Grünecker,
Kinkeldey, Stockmair & Partner
Maximilianstrasse 58
W-8000 München 22(DE)

(54) Straight running conveyor chain for use with fingered transfer plate.

(57) A conveyor chain assembly including a plurality of chain links (24), joined together by hinge pins (26) and the chain links (24) each having a plurality of parallel upstanding ribs (44) on the top surfaces thereof, the parallel upstanding ribs (44) intended to support products thereon and to allow cooperative engagement with a fingered transfer plate (46).

Fig.1

EP 0 482 531 A1

## FIELD OF THE INVENTION

The invention relates to conveyors and more particularly to a chain conveyor including chain links with rib elements to facilitate use of the chain with a fingered transfer plate whereby articles supported by the chain are readily moved from the conveyor chain surface to the transfer plate.

## BACKGROUND PRIOR ART

Conveyor chains are well known wherein chain links are joined by hinge pins such that the chain links are pivotally joined to one another. The chains are arranged in an endless configuration on a conveyor frame and driven by one or more sprockets.

Several different types of conveyor chains are known. One type of such chain is comprised of a plurality of molded plastic chain modules which are arranged in rows, each row of modules commonly including a number of modules positioned together in side-by-side abutting relation. One example of such a modular plastic chain is illustrated in U.S. Patent No. 4,051,949. The modules of these conveyor chains each include a large number of link ends, the link ends being spaced apart and provided in a relatively continuous pattern along the entire length of the forward and rearward edges of the chain modules. The rows of modules are joined together by elongated hinge pins, the hinge pins each extending through the intermeshing link ends of two rows of modules to join the two rows together and wherein the hinge pins have a length approximately the same as the length of the rows such that one end of each hinge pin is adjacent one edge of the conveyor and an opposite end of the hinge pin is adjacent the opposite edge of the conveyor. In most applications, the hinge pins for use in such conveyors are comprised of thermoplastic material. A conveyor belt or the like of any width and length may be assembled from these modular chain links. Such conveyor belts may also include spaced apart parallel ribs projecting from the top surface of the modules and adapted to cooperate with the fingers of a transfer comb or fingered transfer plate to facilitate transfer of articles from the belt. Conveyor chains of this type are shown in U.S. Patent No. 4,171,045. Attention is also directed to U.S. Patent Nos. 4,438,838; 4,858,751 and 4,865,183 assigned to the assignee of the present invention.

Another type of conveyor chain is constructed of molded plastic chain links joined by hinge pins to form an endless conveyor surface and wherein the molded chain links and hinge pins are constructed such that the conveyor formed by the chain can have lateral bends or corners. The links are constructed such they are relatively pivotable both vertically and horizontally, and a conveyor belt comprised of those links can accommodate a curve or bend in the conveying surface. Examples of such side flexing conveyor chains are illustrated in U.S. Patent Nos. 4,436,200; 3,804,232; 3,262,550; 3,279,586; and 4,682,687.

Attention is also directed to U.S. Patent No. 4,880,107 assigned to the assignee of the present invention and illustrating a side flexing conveyor chain including raised ribs extending upwardly from the top surface of the chain such that the chain can be used with a fingered transfer plate to facilitate removal of articles on the chain. Attention is also directed to U.S. Patent No. 4,754,872, U.S. Patent No. 4,153,152, and U.S. Patent No. 4,184,588.

## SUMMARY OF THE INVENTION

The present invention provides an improved conveyor assembly and an improved raised rib conveyor chain for use with a fingered transfer plate, the conveyor chain embodying the invention having a simplified chain link construction and also providing a high tensile strength chain which is inexpensively fabricated of identical chain links.

More particularly the invention includes a conveyor chain comprising a plurality of chain links joined together serially by hinge pins, the chain links each including a body portion and a first plurality of hollow barrels integrally joined to a central portion of the forward edge of the body portion and positioned below the body portion. The first plurality of hollow barrels are spaced apart and include axially aligned bores adapted to house a hinge pin. The chain links also each include a second plurality of hollow barrels integrally joined to the central portion of the rearward edge of the body portion, the second plurality of barrels being spaced apart and adapted to be housed between barrels of the first plurality of barrels of an adjacent link. The first plurality of hollow barrels and the second plurality of hollow barrels are axially aligned so as to be adapted to house a hinge pin. Hinge pins are housed in the aligned first and second plurality of hollow barrels to hingedly join the chain links together, each hinge pin having a length substantially less than the width of the body portion. The chain links also each include a plurality of parallel spaced apart raised ribs supported by the base portion, the ribs having a length extending between the forward edge and the rearward edge and the ribs having upper edges defining a generally planar product supporting surface.

In one embodiment of the invention the hinge pins each include opposite ends, one end being spaced inwardly from an end of the base portion and housed in one of the barrels and the other end spaced inwardly from the other end of the base portion and fixedly housed in another of the barrels.

In one embodiment of the invention the raised ribs supported by the base portion have a length substantially equal to the distance between the forward edge and the rearward edge of the body portion.

In one embodiment of the invention the raised ribs are each fork-shaped members including two prongs and a stem, the prongs of each fork-shaped member being parallel to each other and perpendicular to the aligned axes of the barrels, said raised ribs substantially spanning the distance between the forward edge and the rearward edge, and the stem having a width less than the distance between said prongs.

In one embodiment of the invention the fork-shaped members are arranged on the base portion such that the stems of the fork-shaped members are positioned over the barrels.

One of the advantages of the invention is that a conveyor chain embodying the invention can provide a conveyor surface of various selected widths for use with a fingered transfer plate and the conveyor chain has a simplified construction, in that the conveyor can be comprised of chain modules wherein all of the chain modules are of identical configuration and only a single mold need be provided for molding the chain links.

Another advantage of the invention is that the chain links can be joined together by relatively short steel hinge pins. Because the hinge pins can be relatively short, use of steel hinge pins is economically permissible. The use of steel hinge pins provides for very high tensile strength chain while also providing a chain of simplified construction since the steel hinge pins can be easily inserted into the barrels of the chain links to join the links together.

Various other features and advantages of the invention will be apparent by reference to the following description of a preferred embodiment, from the drawings and from the claims.

BRIEF DESCRIPTION OF THE DRAWINGS

Fig. 1 is a perspective view of a conveyor assembly embodying the invention.

Fig. 2 is an enlarged perspective view of a portion of the conveyor assembly shown in Fig. 1.

Fig. 3 is a cross section view taken along line 3-3 in Fig. 2.

Fig. 4 is an enlarged perspective view of a portion of the conveyor assembly shown in Fig. 1.

Fig. 5 is a perspective view of a chain link embodying the invention.

Fig. 6 is a plan view of the chain link shown in Fig. 5.

Fig. 7 is a cross section view taken along line 7-7 in Fig. 6.

Fig. 8 is a bottom view of the chain link shown in Fig. 5.

Fig. 9 is a front view of the chain shown in Fig. 5.

Fig. 10 is a rear view of the chain shown in Fig. 5.

Fig. 11 is a side view of the chain link shown in Fig. 5.

Fig. 12 is a side view of the chain link shown in Fig. 5.

Before describing a preferred embodiment of the invention in detail it is to be understood that the invention is not limited in its application to the details of construction and to the arrangements set forth in the following description or illustrated in the drawings. The invention is capable of further embodiments and of being practiced and carried out in various ways. Also it is to be understood that the phraseology and terminology employed herein is for the purpose of description and should not be regarded as limiting.

DESCRIPTION OF A PREFERRED EMBODIMENT

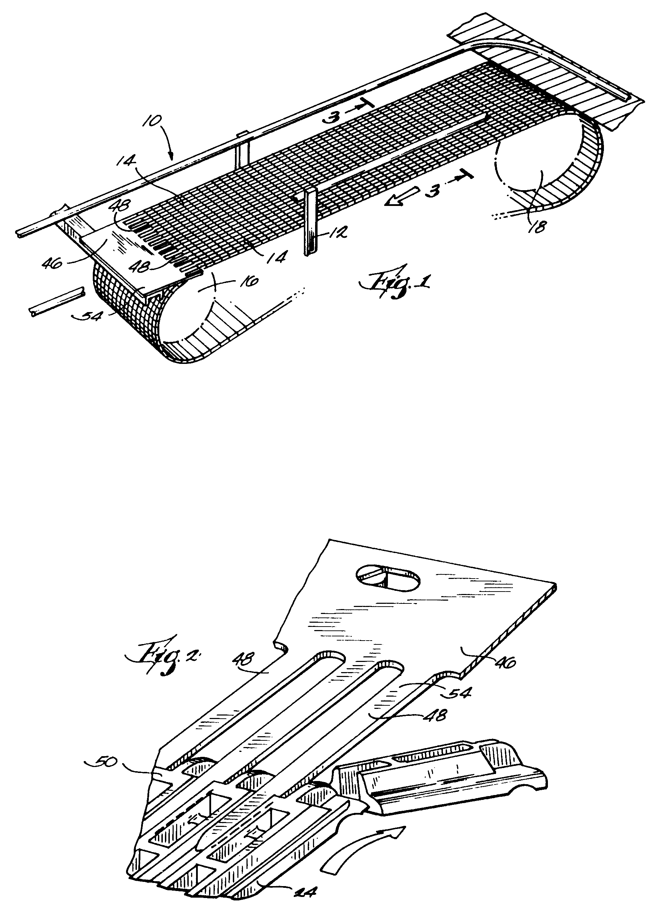

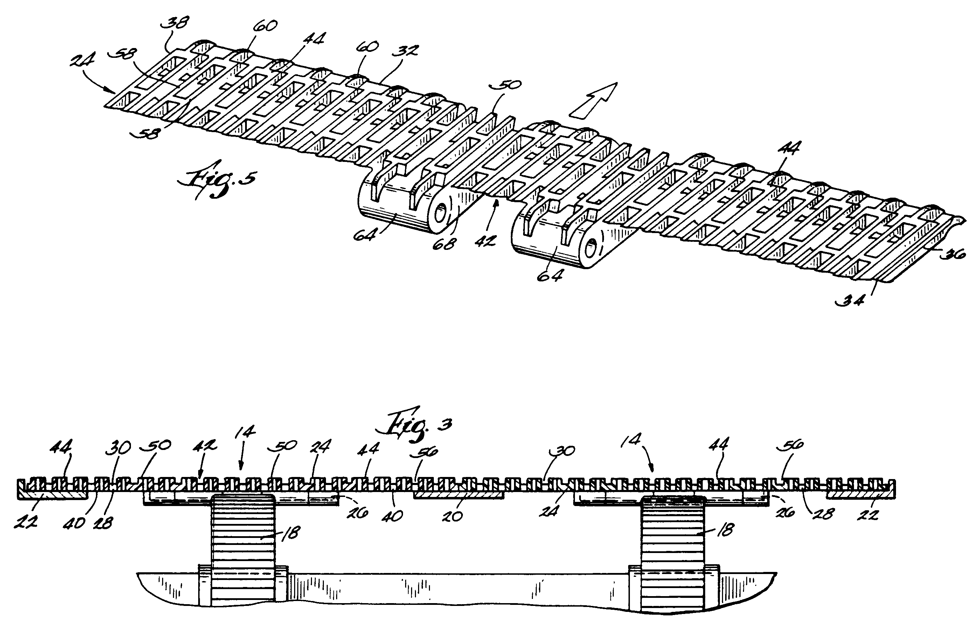

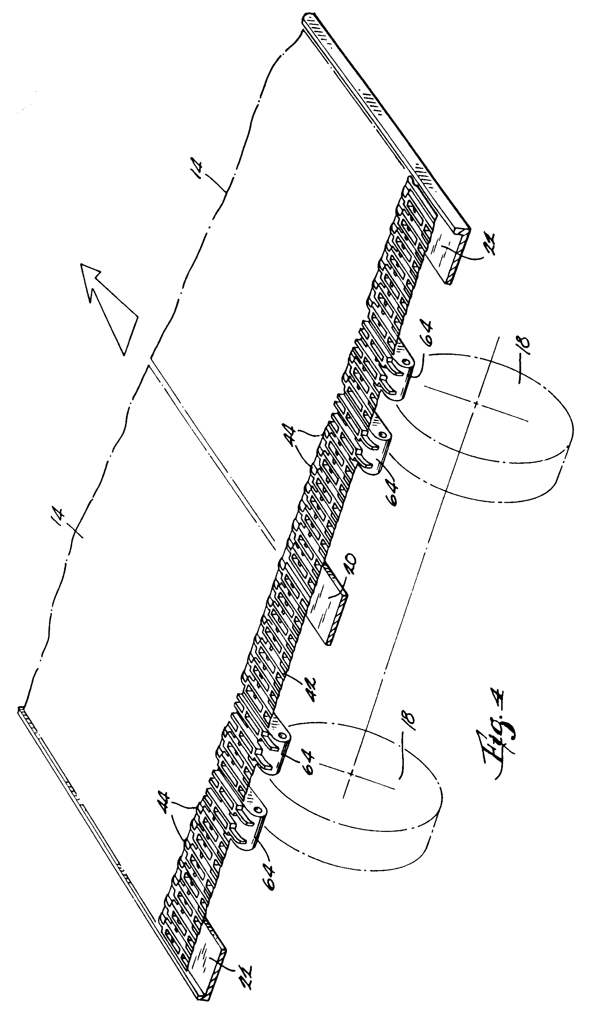

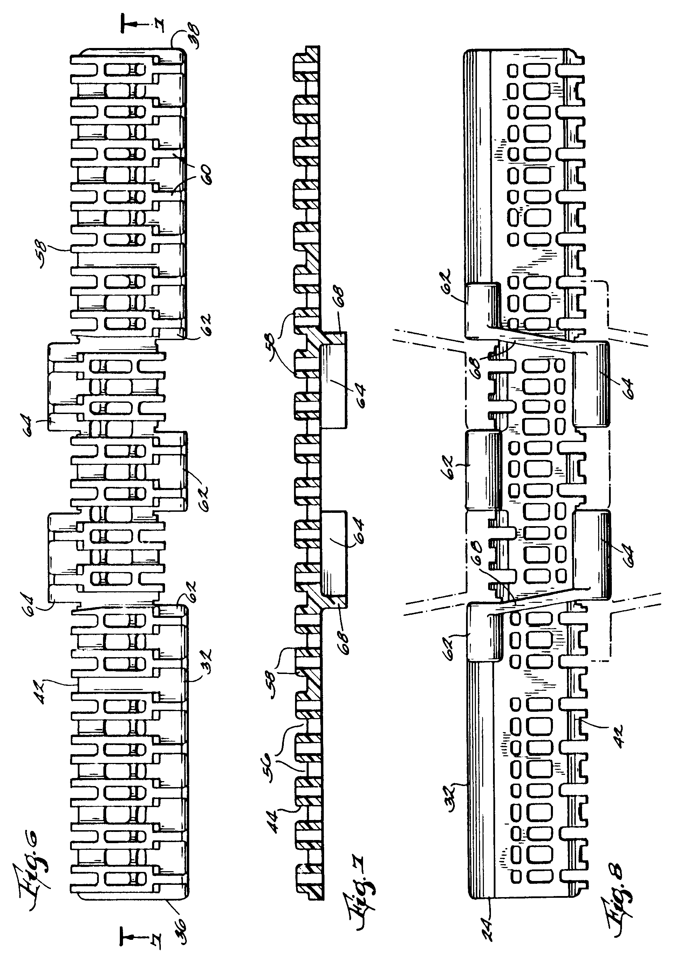

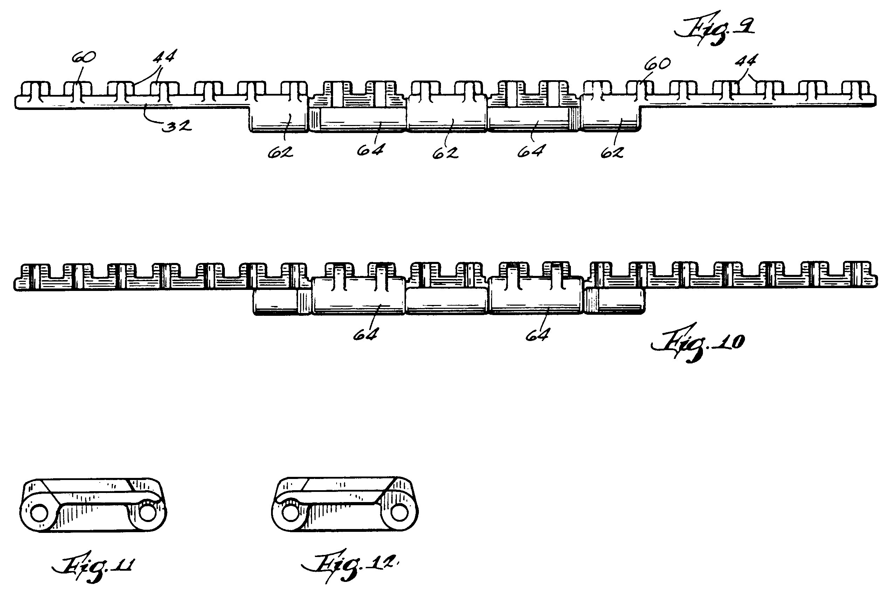

Illustrated in Fig. 1 is a chain conveyor 10 including a conveyor frame 12 supporting a pair of conveyor chains 14 in closely adjacent side-by-side relation, the conveyor chains 14 each being supported by a pair of sprockets 16 and 18 at opposite ends of the conveyor frame. In the illustrated arrangement the sprockets include a pair of drive sprockets 16 and a pair of idler sprockets 18, and the conveyor chains 14 are driven in the direction from right to left as seen in Fig. 1. While the two drive sprockets 16 could be driven in various ways in one form of the invention the drive sprockets can be mounted on a common shaft adapted to be driven by a motor (not shown). As shown in Figs. 3 and 4 the conveyor frame 12 also includes a plurality of elongated spaced apart guide rails 20 and 22 extending along the length of the conveyor frame 12 and adapted to support the conveyor chains 14 for movement along the length of the conveyor. In a preferred form of the invention the guide rails 20 and 22 are spaced apart such that they support and are positioned beneath the opposite sides of each chain 14. The conveyor chains 14 are positioned in closely adjacent side-by-side relation so as to form a substantially uniform continuous surface for supporting the conveyed articles.

The chains 14 are each comprised of a plurality of chain links 24 pivotally joined together by hinge pins 26, the hinge pins having a length substantially less than the width of the chain links.

In a preferred form of the invention each of the chain links 24 is comprised of molded polymeric material and has an integral one piece construction. Each link 24 includes a generally planar top plate or base portion 28 having a generally flat upper surface 30 and defining a forward edge 32, a rearward edge 34 and opposite ends 36 and 38, the opposite ends 36 and 38 including flat lower surfaces 40 adapted to be supported by and ride on the upper surfaces of the guide rails 20 and 22 of the conveyor frame. Intermediate the opposite ends is a central portion 42 of the chain link.

Each chain link also includes a raised portion comprised of a plurality of raised ribs 44 spaced apart and extending parallel to the direction of movement of the chain. The raised ribs 44 are spaced apart so as to receive the fingers 48 of a fingered transfer plate 46 supported by the conveyor frame above the sprockets 16. In the illustrated arrangement, the top surfaces 50 of the raised ribs 44 of the chain links are in the same plane as the top surface 54 of the fingered transfer plate 46. As the sprockets 16 rotate in the counterclockwise direction as shown in Fig. 1, articles carried on the top surfaces 50 of the raised ribs 44 can be transferred onto the fingered transfer plate 46.

While the raised ribs 44 could have other constructions, in the illustrated arrangement the raised ribs 44 each comprise fork-shaped members arranged in regularly spaced rows and supported by the upper surfaces of the chains. The space rows define grooves 56 therebetween for housing the fingers of the fingered transfer plate. The fork-shaped members each have two parallel prongs 58 and a stem 60, the width of the stem 60 being less than the distance between the prongs 58 such that the stem of each fork shaped member will fit between the legs or prongs 58 of the adjacent fork-shaped member on an adjacent link.

The top plate 28 includes a center portion and opposite ends, and a plurality of barrels 62 (Fig. 8) are integrally joined to the forward edge of the center of the top plate 28. In a preferred form of the invention the plurality of barrels 62 integrally joined to the forward edge includes three hollow barrels, the barrels 62 being axially aligned and including central bores adapted to house hinge pins 26, and the barrels 62 being spaced apart. Each of the links 24 also includes a pair of barrels 64 integrally joined to the rearward edge of the body portion and in spaced apart relation such that the barrels 64 joined to the rearward edge of one chain link can be housed in the spaces between the barrels 62 in the forward edge of an adjacent link as shown in phantom in Fig. 8, and such that the aligned bores of the barrels can be aligned axially so as to receive a hinge pin 26.

The opposite ends 36 and 38 of the base portion or top plate 28 extend well outwardly from the center portion 42 of the chain link having the barrels 62 and 64 integrally joined thereto. In the specific arrangement of the invention shown in the drawings, the center portion 42 of the chain link including the barrels 62 and 64 comprises approximately one-third of the width of the chain. In other arrangements, the opposite ends of the chain link could be longer or shorter with respect to the remainder of the chain link than those illustrated in the drawings.

In the illustrated arrangement the chain links also include reach bars 68 integrally joined to the bottom of the base portion 24, the reach bars each having one end joined to the inner ends of the outer ones of the barrels 62 on the forward edge and an opposite end joined to the outside of the barrels 64 on the rearward edge. The reach bars 68 interconnect the barrels 62 and 64 and serve to strengthen the links and particularly to increase the tensile the strength of the chain links in the direction of movement of the chain on the conveyor.

The chain links are joined together by hinge pins 26 which extend through the aligned bores of the barrels 62 and 64 and join the links together in hinged relation. While the hinge pins could be made of other materials, in a preferred arrangement the hinge pins are made of steel or stainless steel. The hinge pins 26 include one end which is preferably knurled such that when the hinge pin 26 is forced into the aligned barrels of two links, the knurled end of the hinge pin will become fixedly embedded in the bore of one of the outer barrels 62 and in such a manner that the hinge pin is not readily removable. In other embodiments of the invention the hinge pins could be comprised of thermoplastic resin, fiberglass or other materials. While in the embodiment of the invention shown in the drawings, the conveyor assembly includes two chains 14 positioned in side-by-side closely adjacent relation, and other applications a single chain or more than two chains could be employed in adjacent side-by-side relation to produce a conveyor chain having any desired width.

As best illustrated in Fig. 4, the fork-shaped raised ribs projecting upwardly from the base portion of the chain are arranged such that the stems 60 of the forks project forwardly on those raised ribs 44 which are supported by the opposite end portions of the chain links, whereas the fork-shaped ribs positioned over the barrels 62 and 64 are arranged such that the prongs 58 extend forwardly and the stems of the fork-shaped members are over the barrel portions of the chain links. It should also be noted that in the illustrated arrangement the fork-shaped members 44 of the chain links are all of substantially the same length and have a length which is substantially the same as the length of the chain link between the forward and rearward edges of the chain base portion.

Additionally, in a preferred form of the invention, the ends of the fork-shaped raised ribs 44 merge with the edges of the top plate to form a continuous smooth integral surface. As best illustrated in Fig. 3, in a preferred form of the invention the raised ribs are supported at the opposite ends of the base portion and are spaced apart slightly from the extreme opposite ends such that the space between the end of the top plate and the raised rib is such that when two like chains are placed together in side-by-side adjacent relation, the opposed raised ribs of the two adjacent chains will define a gap or a space which is substantially the same as the gap 56 between the other raised ribs of the two chains. Accordingly, a single transfer plate 46 can span the two chains 14 with one of the fingers 48 of the transfer plate 46 positioned between the end ribs of the two chains.

In a preferred form of the invention the tolerances between the bores in the barrels and the diameter of the hinge pins will be such that while the chain links can pivot with respect to each other about the hinge pins, no pivotal or sideways movement of the chain links is permitted.

Various features of the invention are set forth in the following claims.

**Claims**

1. A conveyor chain comprising a plurality of chain links joined together serially by hinge pins, the chain links each including a body portion having a generally flat upper surface, the body portion including a forward edge, the forward edge including a central portion and opposite ends and a rearward edge, the rearward edge including a central portion and opposite ends, and the body portion having a width greater than its length, a first plurality of hollow barrels integrally joined to the central portion of the forward edge of the body portion and positioned below the body portion, the first plurality of hollow barrels being spaced apart and the first plurality of hollow barrels including axially aligned bores adapted to house a hinge pin, a second plurality of hollow barrels integrally joined to the central portion of the rearward edge and positioned below the body portion, the second plurality of barrels being spaced apart and adapted to be housed between barrels of the first plurality of barrels of an adjacent link, and the first plurality of hollow barrels and the second plurality of hollow barrels being axially aligned so as to be adapted to house a hinge pin, a plurality of hinge pins housed in the aligned first and second plurality of hollow barrels to hingedly join the chain links together, each hinge pin having a length less than the width of the body portion, and a plurality of parallel spaced apart raised ribs supported by the base portion, the ribs having a length extending between the forward edge and the rearward edge, and the ribs having upper edges defining a generally planar product supporting surface.

2. A conveyor chain as set forth in claim 1 wherein the first plurality of hollow barrels includes three hollow barrels, the barrels including opposite ends spaced inwardly from the opposite ends of the base portion, and the second plurality of hollow barrels including two spaced apart barrels.

3. A conveyor chain as set forth in claim 1 wherein the hinge pins each include opposite ends, one end of each hinge pin being spaced inwardly from an end of the base portion and housed in one of the barrels and the other end spaced inwardly from the other end of the base portion and fixedly housed in another of the barrels.

4. A conveyor chain as set forth in claim 1 wherein the raised ribs supported by the base portion having a length substantially equal to the distance between the forward edge and the rearward edge.

5. A conveyor chain as set forth in claim 1 wherein the raised ribs are each fork-shaped members including two prongs and a stem, the prongs of each fork-shaped member being parallel to each other and perpendicular to the aligned axes of the hollow barrels, said ribs substantially spanning the distance between the forward edge and the rearward edge, and the stem having a width less than the distance between said prongs.

6. A conveyor chain as set forth in claim 5 wherein the fork-shaped members are arranged on the base portion such that the stems of the fork-shaped members are positioned over the barrels.

7. A conveyor chain as set forth in claim 5 wherein the fork-shaped members positioned over the opposite ends of the base portion have the stem extending in one of the forward and rearward directions and wherein at least some of the fork-shaped members positioned above a center portion of the base portion have the stem extending in the other of the forward and rearward directions.

8. A chain link for use in forming a conveyor chain with a plurality of the chain links joined together serially by hinge pins, the chain link comprising a body portion having a generally flat upper surface, the body portion including a forward edge, the forward edge including a central portion and opposite ends and a rearward edge, a rearward edge including a central portion and opposite ends, and the body portion having a width greater than its length, a first plurality of hollow barrels integrally joined to the central portion of the forward edge of the body portion and positioned below the body portion, the first plurality of hollow barrels being spaced apart and the first plurality of hollow barrels including axially aligned bores adapted to house a hinge pin, a second plurality of hollow barrels integrally joined to the central portion of the rearward edge and positioned below the body portion, the second plurality of barrels being spaced apart and adapted to be housed between barrels of the first plurality of barrels of an adjacent link, and the first plurality of hollow barrels and the second plurality of hollow barrels being axially aligned so as to be adapted to house a hinge pin, with the hinge pin housed in the aligned first and second plurality of hollow barrels to hingedly join the chain links together, the hinge pin having a length less than the width of the body portion, and a plurality of parallel spaced apart raised ribs supported by the base portion, the ribs having a length extending between the forward edge and the rearward edge, and the ribs having upper edges defining a generally planar product supporting surface.

9. A chain link as set forth in claim 8 wherein the first plurality of hollow barrels includes three hollow barrels, the barrels including opposite ends spaced inwardly from the opposite ends of the base portion, and the second plurality of hollow barrels including two spaced apart barrels.

10. A chain link as set forth in claim 8 wherein the hinge pins each include opposite ends, one end of each hinge pin being adapted to be spaced inwardly from an end of the base portion and housed in one of the barrels and the other end spaced inwardly from the other end of the base portion and fixedly housed in another of the barrels.

11. A chain link as set forth in claim 8 wherein the raised ribs supported by the base portion having a length substantially equal to the distance between the forward edge and the rearward edge.

12. A chain link as set forth in claim 8 wherein the raised ribs are each fork-shaped members including two prongs and a stem, the prongs of each fork-shaped member being parallel to each other and perpendicular to the aligned axes of the hollow barrels, said ribs substantially spanning the distance between the forward edge and the rearward edge, and the stem having a width less than the distance between said prongs.

13. A chain link as set forth in claim 12 wherein the fork-shaped members are arranged on the base portion such that the stems of the fork-shaped members are positioned over the barrels.

14. A chain link as set forth in claim 12 wherein the fork-shaped members positioned over the opposite ends of the base portion have the stem extending in one of the forward and rearward directions and wherein at least some of the fork-shaped members positioned above a center portion of the base portion have the stem extending in the other of the forward and rearward directions.

*Fig.1*

*Fig.2*

Fig. 5

Fig. 3

Fig. 4

EP 0 482 531 A1

Fig.6

Fig.7

Fig.8

Fig.9

Fig.10

Fig.11 Fig.12

EP 0 482 531 A1

## DOCUMENTS CONSIDERED TO BE RELEVANT

EP 91117850.7

| Category | Citation of document with indication, where appropriate, of relevant passages | Relevant to claim | CLASSIFICATION OF THE APPLICATION (Int. Cl. 5) |
|---|---|---|---|
| D,X | US - A - 4 438 838 (HODLEWSKY) <br> * Fig. 1; column 2, lines 28-36; column 3, lines 48-50 * | 1,3-8, 10-14 | B 65 G 17/08 |
| Y | -- | 2,9 | |
| Y | US - A - 3 788 450 (TSCHUNT) <br> * Fig. 1 * | 2,9 | |
| A | ---- | 1,8 | |

|  |
|---|
| TECHNICAL FIELDS SEARCHED (Int. Cl.5) |
| B 65 G |

The present search report has been drawn up for all claims

| Place of search | Date of completion of the search | Examiner |
|---|---|---|
| VIENNA | 28-11-1991 | BAUMGARTNER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)